# EUROPÄISCHE PATENTSCHRIFT

(11) **EP 2 664 649 B1**
(45) Veröffentlichungstag und Bekanntmachung des Hinweises auf die Patenterteilung: **19.04.2017**
(21) Anmeldenummer: 13167063.0
(22) Anmeldetag: 08.05.2013
(51) Int. Cl.: C08K 3/36

(54) **Polymerwerkstoff, insbesondere für tribologische Anwendungen**
Polymer material, in particular for tribological applications
Matériau polymère, notamment pour des applications tribologiques

(30) Priorität: 18.05.2012 DE 102012104308
(43) Veröffentlichungstag der Anmeldung: 20.11.2013
(73) Patentinhaber: Ensinger GmbH, 71154 Nufringen (DE)
(72) Erfinder: Steck, Corina, 72127 Kusterdingen (DE); Schmid, Andreas, 71116 Gärtringen (DE); Richter, Frank, 72800 Eningen unter Achalm (DE); Pasternak, Axel, 76669 Bad Schönborn (DE); Reinicke, Rolf, 76669 Bad Schönborn (DE); Bickle, Rüdiger, 68799 Reilingen (DE)
(74) Vertreter: Hoeger, Stellrecht & Partner Patentanwälte mbB

(56) Entgegenhaltungen:
- DE-A1-102009 043 435

## Beschreibung

Die Erfindung betrifft einen Polymerwerkstoff, insbesondere für tribologische Anwendungen, im Folgenden auch kurz Tribowerkstoff genannt, basierend auf einer thermoplastischen Matrix und einem oder mehreren darin enthaltenen tribologisch wirksamen Additiven.

Unter die herkömmlich verwendeten tribologischen Additive fallen insbesondere sogenannte Festschmierstoffe.

Tribowerkstoffe werden vielfältig für die Herstellung von Gleitlagern aller Art verwendet. Der Tribowerkstoff kann dabei zur Herstellung dreidimensionaler Bauteile dienen, beispielsweise in Form von Buchsen, Anlaufringen oder Anlaufscheiben oder in Form von Beschichtungen auf einem Träger.

Beschichtungen können flächenhaft auf die Träger direkt aufgebracht werden, beispielsweise durch Auflaminieren, Aufsintern oder im Spritzgussverfahren, bei dem der Träger in das Spritzgusswerkzeug eingelegt wird.

Aus der DE 10 2009 043 435 A1 ist ein Gleitlack zur Beschichtung eines Metallbauteils bekannt, bestehend aus einem Basislack als Matrix sowie mindestens einem Schmierstoff und zusätzlich mindestens einem Verschleißschutzstoff. Als Verschleißschutzstoff wird unter anderem Wollastonit in Partikelform, gegebenenfalls mit einem Silan oberflächenmodifiziert, vorgeschlagen.

Der vorliegenden Erfindung liegt die Aufgabe zugrunde, einen Polymerwerkstoff der eingangs genannten Art insbesondere im Hinblick auf sein Tragverhalten weiter zu verbessern.

Diese Aufgabe wird durch einen Polymerwerkstoff mit den Merkmalen des Anspruchs 1 gelöst.

Die Polymerwerkstoffe der vorliegenden Erfindung zeichnen sich zunächst dadurch aus, dass der Werkstoff als tribologisch wirksames Additiv Wollastonit mit einem Anteil von ca. 1 bis ca. 40 Vol.-% umfasst.

Überraschenderweise zeigt Wollastonit, in einer thermoplastischen Matrix eingebettet, tribologisch vorteilhafte Eigenschaften und verbessert insbesondere das Verschleißverhalten.

Ein wichtiger Aspekt der Erfindung liegt demnach auch in der Verwendung von Wollastonit als tribologisch wirksames Additiv in einem Polymerwerkstoff.

Insbesondere eignet sich nadelförmiger Wollastonit als Additiv, der gegenüber granular und/oder plättchenförmig vorliegendem Wollastonit bessere Verschleißbeständigkeitswerte erbringt, weshalb der Wollastonit erfindungsgemäß zu mehr als der Hälfte seines Anteils nadelförmig zum Einsatz gelangt.

Die Auswahl des nadelförmigen Wollastonit aus den verfügbaren Typen ist nicht kritisch. Besonders geeignete nadelförmige Wollastonit-Materialien weisen einen D₅₀-Wert von ca. 2 µm bis ca. 20 µm auf bei einem mittleren Längen/Dickenverhältnis von ca. 3:1 bis ca. 15:1.

Ein besonders bevorzugtes nadelförmiges Wollastonit-Additiv weist einen D₅₀-Wert von ca. 20 µm bis ca. 25 µm auf bei einem mittleren Längen/Dickenverhältnis der nadelförmigen Partikel von ca. 7:1.

Der nadelförmige Wollastonit kann allerdings auch mit granulären oder plättchenförmigen Modifikationen des Wollastonit eingesetzt werden, wobei der nadelförmige Wollastonit ca. mehr als die Hälfte der Wollastonit-Volumenanteile ausmacht.

Vorzugsweise beträgt der Anteil der nadelförmigen Modifikation am Gesamtgehalt des Wollastonit ca. 60 Vol.-% oder mehr, weiter bevorzugt ca. 70 Vol.-% oder mehr, noch weiter bevorzugt von ca. 80 Vol.-% oder mehr; die restlichen Anteile stellen die granulare und/oder die plättchenförmige Modifikation.

Wenn neben dem Wollastonit kein weiteres tribologisch wirksames Additiv in nennenswerten Anteilen im dem Polymerwerkstoff zum Einsatz kommt, ist es am meisten bevorzugt, dass der Wollastonit-Anteil im Wesentlichen vollständig in der nadelförmigen Konfiguration vorliegt.

Insbesondere bei einer Verwendung von nadelförmigem Wollastonit ist die durch Wollastonit positiv beeinflusste Tragfähigkeit des Tribowerkstoffs deutlich verbessert.

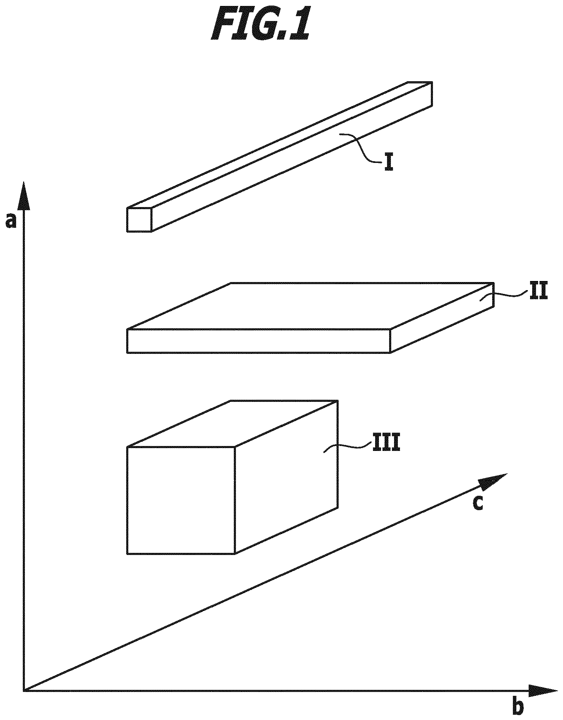

Die verschiedenen zuvor angesprochenen Modifikationen des Wollastonit können in ihren Abmessungen bzw. deren Verhältnisse in den Dimensionen a, b und c wie in Figur 1 gezeigt wie folgt unterschieden werden:
Wollastonit in seiner nadelförmigen Modifikation ist dabei dahingehend definiert, dass eine Abmessung c eines Wollastonit-Partikels wenigstens das Vierfache, insbesondere das Fünffache, zweier weiterer Abmessungen a und b beträgt. Unter einer plättchenförmigen Modifikation sind Partikel mit einer Dimension a kleiner als das 0,3-fache der übrigen Dimensionen b und c zu verstehen, wobei das Verhältnis der Abmessungen b/c im Bereich von ca. 0,7 bis ca. 1,3 liegt. Granular vorliegender Wollastonit umfasst Partikel, deren drei Abmessungen a, b und c im Verhältnis jeweils zueinander - also a/b, a/c und b/c - im Bereich von ca. 0,3 bis ca. 3,5, insbesondere ca. 0,5 bis ca. 2, weiter bevorzugt ca. 0,7 bis ca. 1,3, liegen.

Typische block- oder granulatförmige Wollatonit-Modifikationen, die sich als tribologische Addititve für den Polymerwerkstoff der vorliegenden Erfindung besonders eignen, weisen eine mittlere Partikelgröße im Bereich von ca. 1 µm bis ca. 20 µm auf.

Neben dem Wollastonit können weitere Additive mit der Funktion als Schmier-, Verstärkungs- oder Füllstoff in der thermoplastischen Matrix des erfindungsgemäßen Polymerwerkstoffs vorliegen, wobei deren Anteil vorzugsweise jeweils auf ca. 15 Vol.-% oder weniger beschränkt ist.

Weitere typische tribologisch wirksame Additive, die sich für die erfindungsgemäßen Polymerwerkstoffe eignen, sind Sulfide von Übergangsmetallen, insbesondere Zinksulfid, Kupfersulfid, Molybdändisulfid und Wolframdisulfid, allein oder in Kombination eingesetzt, wobei Wolframdisulfid besonders bevorzugt ist. Darüber hinaus eignen sich PTFE, hexagonales Bornitrid und Graphit, allein oder in Kombination eingesetzt, insbesondere auch in Kombination mit einem oder mehreren der vorerwähnten Metallsulfide.

Andere die Eigenschaften der erfindungsgemäßen Polymerwerkstoffe vorteilhaft beeinflussende Additive sind z.B. Füllstoffe und Verstärkungsstoffe, insbesondere Titandioxid, Bariumsulfat, Talkum sowie Glas-, Kohle- und Polymerfasern, insbesondere Aramidfasern, jeweils einzeln oder in Form von Abmischungen.

Vorzugsweise wird die Summe der Anteile aller Additive in Form von Verstärkungs- und Füllstoffen sowie tribologisch wirksamen Additiven (Schmierstoffen) einschließlich des Wollastonit-Anteils auf ca. 50 Vol.-% oder weniger am erfindungsgemäßen Polymerwerkstoff beschränkt.

Bevorzugt beträgt der Anteil des Wollastonit am Polymerwerkstoff ca. 1 bis ca. 30 Vol.-%, weiter bevorzugt ca. 2 bis ca. 25 Vol.-%.

Im Rahmen der vorliegenden Erfindung bevorzugt verwendete Kunststoffe für die thermoplastische Matrix werden je nach Einsatzzweck der aus dem Polymerwerkstoff zu fertigenden Produkte ausgewählt aus Polyphthalamid (PPA), Polyamid (PA), Polyetherketon (PEK), Polyetheretherketon (PEEK), Polyethylensulfon (PES), Polyvinylidenfluorid (PVDF), Polyphenylensulfid (PPS), Polyoxymethylen (POM), Polyethylen (PE), Polyimid (PI), Polyester, flüssigkristallinen Polymeren (Liquid-Crystalline-Polymers LCP), Polyphenylenether (PPE) oder Mischungen von zwei oder mehreren dieser Kunststoffe. Besonders bevorzugt sind die Polymerwerkstoffe PPA, PEEK, PPS, PA und PES.

Ein gemäß der vorliegenden Erfindung besonders bevorzugten Polymerwerkstoff basiert auf PPA und enthält dieses Polymer mit einem Anteil von ca. 70 bis ca. 90 Vol.-%, einen Anteil an Wollastonit von ca. 3 bis ca. 15 Vol.-%, wobei der Wollastonit vorzugsweise zumindest zur Hälfte nadelförmig vorliegt, und ca. 0,5 bis ca. 5 Vol.-% Wolframdisulfid und/oder Molybdändisulfid.

Ein besonders bevorzugter erfindungsgemäßer Polymerwerkstoff umfasst eine auf PPA basierende thermoplastische Matrix, die sich im Hinblick auf eine große Anzahl von Anwendungen im Zusammenwirken mit dem mineralischen Füllstoff Wollastonit als vorteilhaft erwiesen hat. Sie zeigt zwar nicht die Hochtemperaturbeständigkeit eines Werkstoffs mit einer Matrix aus PEEK, liegt aber dennoch deutlich oberhalb der Beanspruchbarkeit von PVDF-basierten Tribowerkstoffen.

PPA hat gegenüber PEEK bereits als Material Kostenvorteile und lässt sich bei niedrigeren Temperaturen verarbeiten, was die Wirtschaftlichkeit weiter erhöht.

Hierbei beträgt der Anteil des PPA an dem Kunststoffmaterial der thermoplastischen Matrix vorzugsweise ca. 50 Vol.-% oder mehr. Andere Polymere, die in Mischung mit PPA Verwendung finden können, sind z.B. Polyamid 66 oder generell schlagzähmodifizierte Polymere, insbesondere Elastomer-modifizierte Polymere.

Vorzugsweise beträgt der Anteil der weiteren Polymere neben der Hauptkomponente PPA bis zu ca. 15 Vol.-%, insbesondere bis zu ca. 10 Vol.-% und weiter bevorzugt bis zu ca. 5 Vol.-%.

Die Verwendung weiterer Polymere ergibt die Möglichkeit, die Eigenschaften der Matrix und damit des erfindungsgemäßen Polymerwerkstoffs weiter zu optimieren und/oder die Wirtschaftlichkeit des erfindungsgemäßen Werkstoffs zu verbessern.

Gegenstand der Erfindung ist des Weiteren eine unter Verwendung des erfindungsgemäßen Polymerwerkstoffs hergestellte Folie, die sich zum Beschichten von Trägern eignet.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Verwendungen des erfindungsgemäßen Tribowerkstoffs in dreidimensionalen, selbst tragenden Gleitlagern sowie den Beispielen.

Diese und weitere Vorteile der Erfindung werden im Folgenden anhand der Beispiele und der Zeichnung noch näher erläutert. In der Zeichnung zeigen:
- Figur 1:: eine schematische Darstellung der Wollastonit-Modifikation zur Festlegung der Dimensionen a, b und c; und
- Figur 2:: eine schematische Darstellung einer Prüfvorrichtung zur Bestimmung von Verschleißeigenschaften von Polymerwerkstoffen in Buchsen- oder Hülsenform.

Figur 1 zeigt schematisch Partikel verschiedener Wollastonit-Modifikationen zur Festlegung der Dimensionen a, b und c. Das Bezugszeichen I bezeichnet die nadelförmige Modifikation, das Bezugszeichen II die plättchenförmige und das Bezugszeichen III die block- oder granulatförmige Modifikation des Wollastonit.

Zur Unterscheidung der Wollastonit-Modifikationen wurde bereits im allgemeinen Teil der Erfindungsbeschreibung auf die Dimensionen a, b und c und deren Verhältnisse Bezug genommen.

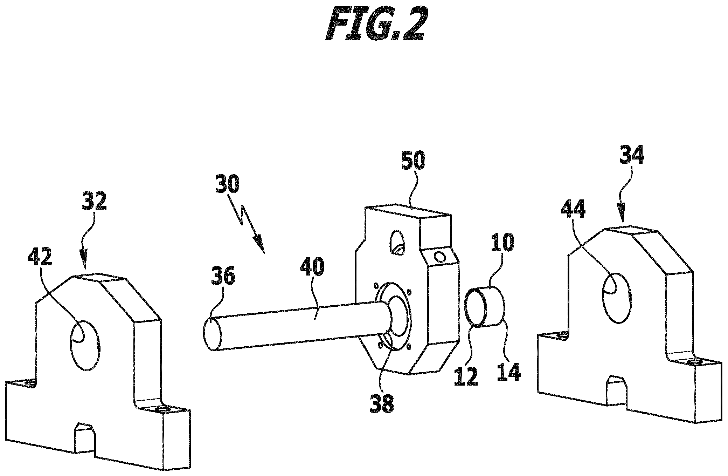

Figur 2 zeigt in schematischer Darstellung eine Prüfvorrichtung 30 (im Folgenden auch Lagerprüfstand genannt), mit der die im Folgenden noch beschriebenen Verschleißversuche durchgeführt wurden.

Die wesentlichen Bestandteile der Prüfvorrichtung 30 sind das vordere und das hintere Stützlager 32 bzw. 34, welche die freien Enden 36, 38 einer Welle 40 aufnehmen, die sich in Durchgangsöffnungen 42, 44 der Stützlager 32, 34 hinein erstrecken.

Figur 2 zeigt darüber hinaus einen Probekörper 10, wie er z.B. als Lagerbuchse oder -hülse zur Anwendung kommt. In den nachfolgenden Beispielen haben die auf ihre tribologischen Eigenschaften geprüften Hülsen und Buchsen 10 die folgenden Abmessungen: einen Außendurchmesser von 33 mm, einen Innendurchmesser von 30 mm und eine Länge in Axialrichtung von 20 mm.

Als Buchsen werden Probekörper bezeichnet, die eine Polymerwerkstoffbeschichtung auf der Innenoberfläche eines metallischen Stützkörpers aufweisen, während als Hülsen Probekörper bezeichnet werden, die vollständig aus dem Polymerwerkstoff gefertigt sind. Bei den Buchsen weist die Polymerwerkstoffauflage auf dem Metallträger eine Dicke von ca. 160 µm auf.

In den Verschleißtests werden gesonderte Verschleißwerte 3 mm vom ersten Buchsen- oder Hülsenende 12 und 3 mm vom zweiten Buchsen- oder Hülsenende 14 entfernt als Änderung des Innendurchmessers in Richtung der einwirkenden Kraft gemessen.

Der mittlere Verschleiß wird durch Mittelwertbildung dieser beiden Verschleißwerte ermittelt.

Der Prüfkörper, in den vorliegenden Beispielen eine Lagerbuchse oder -hülse 10, wird in eine Aufnahme 50 eingepresst. Die Welle 40 wird durch die Buchse bzw. Hülse 10 hindurchgesteckt und mit ihren beiden Enden in den Stützlagern 32, 34 drehbar gehalten.

Die Aufnahme 50 beinhaltet Anschlüsse zur Herstellung eines Schmiermittelkreislaufs (im Einzelnen nicht gezeigt), mit dem die Buchse während der Tests mit Schmiermittel versorgt werden kann.

### Prüfablauf

Auf dem Lagerprüfstand 30 der Figur 2 werden die zu prüfenden Lagerbuchsen bzw. -hülsen 10 hinsichtlich des Verschleißwiderstands unter rotierender Bewegung getestet. Die Tests erfolgen unter Flüssigkeitsschmierung, als Schmiermedium dient ein Motorenöl (V-Öl) mit einem Druck von 2 bar.

Zunächst wird die Lagerbuchse bzw. -hülse 10 aus dem zu prüfenden Polymerwerkstoff nach Vermessung des Innendurchmessers in die Aufnahme 50 des Lagerprüfstands 30 eingepresst. In die Buchse/Hülse 10 wird danach die Welle 40 eingebracht, die daraufhin an ihren beiden Enden 36, 38 in den Stützlagern 32 und 34 frei drehbar gelagert wird. Während der Prüfungen wirkt über die Aufnahme 50 eine Kraft senkrecht zur Achse der Welle 40, so dass auf die zu prüfende Buchse/Hülse 10 eine statische Linienlast wirkt. Während eines Prüflaufs wird die zu prüfende Buchse/Hülse 10 (Innenoberfläche) mit Schmiermedium mit einer Temperatur von 30°C und einer Viskosität von 3,2 m²/s durchspült. Als Messgrößen werden u.a. das Drehmoment der Welle 40, der Durchfluss des Schmiermediums und die Temperatur der Stützlager aufgezeichnet.

### Verschleißtest

Beim Verschleißtest wird die über die Aufnahme 50 einwirkende Last beginnend mit 3 MPA in Stufen von 0,5 MPa bis zu einer vorgegebenen Maximallast (hier: 22 MPa) erhöht und die jeweilige Laststufe während 15 min gehalten. Der Verschleißtest erfolgt bei vergleichsweise niedrigen Gleitgeschwindigkeiten (Wellenoberfläche gegenüber Buchsen-/Hülseninnenoberfläche) von 0,16 m/s, so dass sich das Prüfsystem aus Welle 40 und Buchse/Hülse 10 in einer Mischreibung bewegt, um einen entsprechenden Verschleiß zu erzeugen. Nach Abschluss des Prüflaufs werden dann die Prüfbuchsen bzw. -hülsen 10 ausgebaut und ihr Innendurchmesser an den genannten Stellen erneut vermessen. Aus dem Vergleich dieser Messwerte mit dem ursprünglich ermittelten Innendurchmesser ergibt sich dann der mittlere bzw. maximale Verschleiß.

### Verschleiß bei Start-Stopp-Bedingungen

Bei diesem speziellen Verschleißtest liegt eine konstante Last von 8,3 MPa oder 13,3 MPa an der Aufnahme 50 an. Die Drehzahl der Welle 40 wird während einem Zyklus stetig von 0 auf 300 Upm erhöht und danach stetig wieder auf 0 Upm reduziert. Die Dauer eines Zylus beträgt 10 sec. Dieser Zyklus wird 6000mal wiederholt, wobei zwischen zwei Zyklen jeweils eine Pause von 1 sec bei 0 Upm eingehalten wird.

Die Ermittlung der Bruchdehnung ε_{B} wurden entsprechend der Norm DIN EN ISO 527-1:2010 am Typ 1B der dort definierten Probekörper vorgenommen. Die Dicke des Prüfkörpers betrug jeweils 4 mm. Die Prüfkörper werden aus dem jeweils zu prüfenden Polymerwerkstoff-Granulat im Spritzguss gefertigt. Tritt bei den Messungen der Bruch vor Erreichen der Streckgrenze auf, wird der zuletzt aufgezeichnete Dehnungswert angegeben, der vor einem Spannungsabfall auf weniger als oder gleich 10% des Festigkeitswerts gemessen wurde.

### Bestimmung der Wärmeformbeständigkeitswerte

Die in den Beispielen z.T. angegebenen Werte für HDT A/B sind gemäß ISO/DIS 75-1:2011 ermittelt. Beim Verfahren A beträgt die Biegespannung 1,80 MPa, beim Verfahren B 0,45 MPa.

### Beispiele

Das in den folgenden Beispielen verwendete PPA ist, soweit nichts anderes angegeben, VESTAMID^{®} Htplus M1000 natur, erhältlich bei der EVONIK Degussa GmbH, Essen, Deutschland.

Der in den folgenden Beispielen verwendete Wollastonit ist in seiner nadelförmigen Modifikation als TREMIN^{®} 939-600 AST und in seiner block- oder granulatförmigen Modifikation als TREMIN^{®} 283-800 AST bei der Quarzwerke GmbH, Frechen, Deutschland, erhältlich.

Der nadelförmige Wollastonit lässt sich wie folgt charakterisieren:
Mittleres Längen/Dickenverhältnis 7:1, Partikelgrößenverteilung:
   L₅₀ = D₅₀ = 23 µm; L₉₀ = 49 µm; L₁₀ = 9 µm.

Der granulatförmige Wollastonit weist einen D₉₅-Wert von 8 µm und einen D₅₀-Wert von 2,5 µm auf.

Der als Vergleich in verschiedenen Beispielen herangezogene Werkstoff Tecacomp KS MK100 (im Folgenden kurz KS MK100 genannt) besteht im Wesentlichen aus 60 Gew.-% PEEK, 10 Gew.-% Kohlefaser, 10 Gew.-% Graphit, 10 Gew.-% ZnS sowie 10 Gew.-% TiO₂. Der Vergleichswerkstoff ist erhältlich bei der ENSINGER GmbH, Nufringen.

Die Polymerwerkstoffe werden in den folgenden Beispielen mit den weiteren Komponenten zu Compounds verarbeitet. Danach werden aus den Compounds im Spritzguss Lagerbuchsen-Rohteile gefertigt, die in spanender Bearbeitung zu den fertigen Lagerbuchsen/-hülsen mit den vorgegebenen Abmessungen weiterverarbeitet werden.

### Beispiel 1

Polymerwerkstoffe gemäß der vorliegenden Erfindung auf der Basis von PPA als einziger Komponente des thermoplastischen Kunststoffmaterials werden mit unterschiedlichen Gehalten an Wollastonit ohne weitere Additive als Compound hergestellt und nachfolgend zu Lagerbuchsen 10 wie oben beschrieben verarbeitet.

Als Wollastonit kommt nadelförmiger und/oder blockförmiger (granularer) Wollastonit zum Einsatz.

Die Anteile der Komponenten der erfindungsgemäßen Polymerwerkstoffe 1.1 bis 1.5 sind in der Tabelle 1 enthalten. Die Testergebnisse für den Verschleiß sind ebenfalls in Tabelle 1 aufgelistet.

Die Auswertung der Testergebnisse zeigt, dass bei der Verwendung von nadelförmigem Wollastonit bereits mit einem Anteil von ca. 8 Vol.-% ein maximaler Effekt erzielbar ist. Die Zugfestigkeit nimmt jedoch mit höherem Anteil des nadelförmigen Wollastonit noch zu. Bei der Verwendung bzw. Mitverwendung von blockförmigem Wollastonit werden höhere Verschleißwerte beobachtet.

Die Zugfestigkeitswerte und E-Module der Wollastonit-haltigen PPA-Werkstoffe liegen jeweils deutlich über den Werten für reines PPA.

**Tabelle 1**

| Werkstoff | 1.1 | 1.2 | 1.3 | 1.4 | 1.5 |
|---|---|---|---|---|---|
| PPA | 93 | 93 | 93 | 93 | 90 |
| nadelf. Wollastonit | 3,5 | 2,5 | - | 7 | 10 |
| blockf. Wollastonit | 3,5 | 4,5 | 7 | - | - |
| Verschleiß [µm] | 7 | 10 | 6 | 5,5 | 10 |

### Beispiel 2

In diesem Beispiel werden erfindungsgemäße Polymerwerkstoffe mit einem weiteren tribologisch wirksamen Additiv vorgestellt. Die Auswirkungen der weiteren tribologischen Additive auf den Verschleiß werden geprüft. Die Testergebnisse, die in diesem Beispiel an Hülsen 10 ermittelt wurden, sind mit den Komponenten der einzelnen Werkstoffe in Tabelle 2 aufgeschlüsselt. Die Anteile der Komponenten sind in Vol.-% angegeben.

Als weitere Komponente des thermoplastischen Kunststoffmaterials kommt im Polymerwerkstoff 2.9 ein von dem Werkstoff VESTAMID Htplus M1000 verschiedenes PPA-Material zum Einsatz (in Form von Amodel AT-1002 HSNT, erhältlich von Solvay Advanced Polymers LLC). Die beiden PPA-Werkstoffe sind in ihren mechanischen Eigenschaften in der folgenden Tabelle einander gegenübergestellt:

| | Htplus M1000 | AT-1002 HSNT |
|---|---|---|
| Zugfestigkeit [MPa] | 95 | 75 |
| Bruchdehnung [%] | 3,2 | 14,1 |
| E-Modul [MPa] | 3667 | 2416 |
| Schlagzähigkeit [kJ/m²] | 44 | 126 |
| HDT-A [°C] | 126 | 121 |
| HDT-B [°C] | 223 | 163 |

Als weitere tribologische Additive kommen zum Einsatz:
Wolframdisulfid WS₂ als Austro Tecc WS2, erhältlich von der Chemetall GmbH, Frankfurt a.M., Deutschland;
Graphit (z.B. Graphite GR01S, erhältlich bei der Graphit Kropfmühl AG, Hauzenberg, Deutschland);
Molybdändisulfid MoS₂ in Form von Molycote mikrofein in den Polymerwerkstoffen 2.1 und 2.5, erhältlich bei der Kistenpfennig AG, Mainz, und in Form von MIPO M15 in dem Polymerwerkstoff 2.9, erhältlich bei der ECCO Gleittechnik GmbH, Seeshaupt;
Kupfersulfid Cu₂S (z.B. Austro Tecc CB500, erhältlich bei der Chemetall GmbH, Frankfurt a.M., Deutschland);
PTFE, erhältlich als Herolub 30 natur bei der Nordmann, Rassmann GmbH, Hamburg;
Talk erhältlich als Plustalc H05 bag - AW bei der Mondo Minerals B.V., Amsterdam.

**Tabelle 2**

| Werkstoff | 2.1 | 2.2 | 2.3 | 2.4 | 2.5 | 2.6 | 2.7 | 2.8 | 2.9 |
|---|---|---|---|---|---|---|---|---|---|
| PPA Htplus M1000 | 90 | 86 | 90 | 89,5 | 90 | 86 | 90 | 86,5 | 60 |
| PPA AT-1002 HSNT | - | - | - | - | - | - | - | - | 30 |
| nadelf. Wollast. | - | - | - | - | 7 | 7,5 | 8 | 7 | 4 |
| blockf. Wollast. | 7 | 7,5 | 8 | 7,5 | - | - | - | - | 4 |
| WS₂ | - | - | 2 | - | - | - | 2 | - | - |
| Graphit | - | 6,5 | - | - | - | 6,5 | - | - | - |
| MoS₂ Molycote | 3 | - | - | - | 3 | - | - | - | - |
| Cu₂S | - | - | - | 3 | - | - | - | - | - |
| PTFE | - | - | - | - | - | - | - | 6,5 | - |
| Talk | - | - | - | - | - | - | - | - | - |
| MoS₂ MIPO M15 | - | - | - | - | - | - | - | - | 2 |
| Verschleiß[µm] | 39 | 44 | 36 | 32 | 12 | 16 | 9 | 9 | 13 |

### Beispiel 3

In diesem Beispiel werden weitere erfindungsgemäße und bereits zuvor beschriebene Polymerwerkstoffe auf einen mittleren Verschleiß als Hülse und in Form einer Buchse geprüft. Als Vergleichs-Standard dient der Werkstoff KS MK 100 (Werkstoff 3.5).

Die Zusammensetzung der Polymerwerkstoffe und die Anteile der verschiedenen Komponenten (in Vol.-%) sowie die Testergebnisse sind in der Tabelle 3 zusammengefasst.

Bei allen Verschleiß-Tests zeigen die Polymerwerkstoffe mit nadelförmiger Wollastonit-Modifikation ein günstigeres Verschleißverhalten.

**Tabelle 3**

| Werkstoff | 3.1 | 3.2 | 3.3 = 1.5 | 3.4 | 3.5 |
|---|---|---|---|---|---|
| PPA | 89 | 90 | 90 | 89 | - |
| nadelf. Wollastonit | 5 | - | 10 | 10 | - |
| blockf. Wollastonit | 5 | 10 | - | - | - |
| WS₂ | 1 | - | - | 1 | - |
| KS M K 100 | - | - | - | - | 100 |
| Verschleiß Hülse [µm] | 3,5 | 5 | 3,3 | 5 | - |
| Start-Stopp Verschleiß Hülse [µm] bei Last 8,3 MPa | 6 | 20 | 7 | 4 | - |
| Verschleiß Buchse [µm] | 4,5 | 18,5 | 8,5 | 5 | 8 |
| Start-Stopp Verschleiß Buchse [µm] bei Last 13,3 MPa | 16,5 | - | 5 | 15 | 32,5 |

### Beispiel 4

In diesem Beispiel werden sowohl bereits beschriebene als auch weitere erfindungsgemäße Polymerwerkstoffe einer Verschleißprüfung unterzogen, wobei bei einer aus dem jeweiligen Polymerwerkstoff hergestellten Buchse die Verschleißwerte bei einer Last von 1 MPa geprüft wurden.

Die Zusammensetzung der Polymerwerkstoffe sowie die erhaltenen Testergebnisse sind in Tabelle 4 aufgelistet.

**Tabelle 4**

| Werkstoff | 4.1 | 4.2 = 1.5 | 4.3 | 4.4 = 3.4 | 4.5 | 4.6 = 3.1 | 4.7 |
|---|---|---|---|---|---|---|---|
| PPA | 90 | 90 | 88 | 89 | 90 | 89 | - |
| nadelf. Wollast. | - | 10 | 10 | 10 | 5 | 5 | - |
| blockf. Wollast. | 10 | - | - | - | 5 | 5 | - |
| WS₂ | - | - | - | 1 | - | 1 | - |
| Cu₂S | - | - | 2 | - | - | - | - |
| KS MK 100 | - | - | - | - | - | - | 100 |
| Verschleiß [µm] | 19 | 9 | 12 | 5 | 18 | 5 | 8 |

Die Verschleißwerte der Tabelle 4 zeigen wieder zufriedenstellende Eigenschaften für erfindungsgemäße Polymerwerkstoffe, die blockförmigen Wollastonit als Additiv enthalten. Diese Feststellung gilt auch für die Verwendung von nadelförmigen und blockförmigen Wollastonit-Materialien nebeneinander (vgl. Werkstoffe 4.1 und 4.5).

Eine leichte Verbesserung der Verschleißeigenschaften lassen sich bei blockförmigen Wollastonit-Materialien durch das Zumischen kleinerer Anteile weiterer tribologischer Additive/Festschmierstoffe wie z.B. Cu₂S und WS₂ erzielen.

Eine weitere, deutliche Verbesserung der tribologischen Eigenschaften, hier insbesondere beim Verschleiß, ergibt sich bei der ausschließlichen Verwendung von nadelförmigem Wollastonit (vgl. Werkstoff 4.2). In Kombination mit geringen Anteilen von weiteren tribologischen Additiven, insbesondere WS₂ (vgl. Werkstoff 4.4) ergeben sich weitere deutliche Verbesserungen des Verschleißverhaltens. Überraschenderweise wird ein vergleichbar gutes Verschleißverhalten erzielt, wenn block- und nadelförmiger Wollastonit neben einem geringen Volumenanteil WS₂ zum Einsatz kommt (Werkstoff 4.6).

Zum Vergleich sind die Verschleißwerte für den herkömmlichen Werkstoff KS MK100 (Werkstoff 4.7) angegeben.

### Beispiel 5

In diesem Beispiel werden die Ergebnisse von Reibwertprüfungen, u.a. für einige der in den vorhergehenden Beispielen schon vorgestellten Polymerwerkstoffe anhand von Lagerbuchsen bestimmt. Als Vergleich wird ein PEEK-basierender Polymerwerkstoff mit der Zusammensetzung 75 Vol.-% PEEK, 10 Vol.-% Kohlenstofffasern, 7 Vol.-% Graphit, 4 Vol.-% ZnS und 4 Vol.-% TiO₂ verwendet. Die Polymerwerkstoffauflage auf dem Metallträger hatte eine Dicke von ca. 160 µm.

Die Prüfungen erfolgten mittels der in Figur 2 gezeigten Apparatur.

Mit einer Drehmomentmesswelle wird ein durch Reibung erzeugtes Reib- bzw. Drehmoment M ermittelt. Die Länge des Hebelarms entspricht dabei dem Radius r der Welle 40, so dass sich die aufgrund der Reibung zu überwindende Tangentialkraft F_{T} als M/r ergibt.

Über die Formel µ = F_{T} / F_{N}, wobei F_{N} die über die Buchsenaufnahme 50 während der Messung ausgeübte Normalkraft ist.

Der Reibwert µ wurde bei einer Normalkraft F_{N} von 600 N bei Gleitgeschwindigkeiten von 0,6 m/sec und 1,0 m/sec bestimmt. Die Ergebnisse sind in der folgenden Tabelle 5 enthalten.

**Tabelle 5**

| Werkstoff | 5.1 = 3.4 | 5.2 = 2.5 | 5.3 = 2.6 | Vergleich |
|---|---|---|---|---|
| PPA | 89 | 90 | 86 | - |
| nadelf. Wollastonit | 10 | 7 | 7,5 | - |
| WS₂ | 1 | - | - | - |
| MoS₂ | - | 3 | - | - |
| Graphit | - | - | 6,5 | - |
| Reibwert µ bei 0, 6 m/sec | 0,012 | 0,009 | 0,017 | 0,023 |
| Reibwert µ bei 1,0 m/sec | 0,009 | 0,007 | 0,017 | 0,015 |

## Patentansprüche

1. Polymerwerkstoff, insbesondere für tribologische Anwendungen, umfassend eine Matrix aus einem thermoplastischen Kunststoffmaterial sowie einen Anteil von ca. 1 bis ca. 40 Vol.-% Wollastonit als tribologisches Additiv, wobei der Wollastonit zu mehr als der Hälfte seines Anteils in einer nadelförmigen Modifikation enthalten ist.

2. Polymerwerkstoff nach Anspruch 1, **dadurch gekennzeichnet, dass** der Anteil von Wollastonit an dem Werkstoff ca. 1 bis ca. 30 Vol.-% und insbesondere ca. 2 bis 25 Vol.-% beträgt.

3. Polymerwerkstoff nach Anspruch 1 oder 2, **dadurch gekennzeichnet, dass** der Werkstoff ein oder mehrere weitere Additive, insbesondere Schmier- oder Füllstoffe, mit einem Anteil von jeweils ca. 15 Vol.-% oder weniger umfasst.

4. Polymerwerkstoff nach Anspruch 3, **dadurch gekennzeichnet, dass** die Summe aller Additive einschließlich des Wollastonit-Anteils ca.
50 Vol.-% oder weniger beträgt.

5. Polymerwerkstoff nach Anspruch 3 oder 4, **dadurch gekennzeichnet, dass** die weiteren Schmierstoffe ausgewählt sind aus Sulfiden von Übergangsmetallen, insbesondere Zinksulfid, Kupfersulfid, Molybdändisulfid und/oder Wolframdisulfid sowie PTFE, hexagonalem Bornitrid und/oder Graphit.

6. Polymerwerkstoff nach einem der Ansprüche 3 bis 5, **dadurch gekennzeichnet, dass** die weiteren Füllstoffe ausgewählt sind aus Talkum, Titandioxid, Bariumsulfat sowie Verstärkungsstoffen, insbesondere Glas-, Kohle- und Polymerfasern, insbesondere Aramidfasern.

7. Polymerwerkstoff nach einem der Ansprüche 1 bis 6, **dadurch gekennzeichnet, dass** der Volumenanteil der nadelförmigen Modifikation am gesamten Volumen des Wollastonit ca. 60 Vol.-% oder mehr, insbesondere ca. 70 Vol.-% oder mehr, beträgt.

8. Polymerwerkstoff nach einem der Ansprüche 1 bis 7, **dadurch gekennzeichnet, dass** das thermoplastische Kunststoffmaterial ausgewählt ist aus Polyphthalamid (PPA), Polyamid (PA), Polyetherketon (PEK), Polyetheretherketon (PEEK), Polyethylensulfon (PES), Polyvinylidendifluorid (PVDF), Polyphenylensulfid (PPS), Polyoxymethylen (POM), Polyethylen (PE), Polyimid (PI), Polyester, flüssigkristallinen Polymeren (LCP), Polyphenylenether (PPE) sowie Mischungen dieser Polymeren.

9. Polymerwerkstoff nach Anspruch 8, **dadurch gekennzeichnet, dass** das thermoplastische Kunststoffmaterial überwiegend von PPA gebildet ist, dessen Anteil am Kunststoffmaterial bevorzugt ca. 50 Vol.-% oder mehr beträgt.

10. Polymerwerkstoff nach Anspruch 9, **dadurch gekennzeichnet, dass** das thermoplastische Kunststoffmaterial einen Anteil von PPA im Bereich von ca. 80 bis ca. 90 Vol.-%, einen Anteil an nadelförmigem Wollastonit im Bereich von ca. 10 bis ca. 20 Vol.-% und einen Anteil an Wolframdisulfid im Bereich von ca. 0,5 bis ca. 2 Vol.-% umfasst.

11. Polymerfolie, hergestellt unter Verwendung eines Polymerwerkstoffs nach einem der Ansprüche 1 bis 10.

12. Gleitlager, hergestellt unter Verwendung eines Polymerwerkstoffs nach einem der Ansprüche 1 bis 10 oder einer Folie nach Anspruch 11.

13. Verwendung von Wollastonit als tribologisches Additiv in einem Polymerwerkstoff, insbesondere gemäß einem der Ansprüche 1 bis 10.

## Claims

1. Polymer material, in particular for tribological applications, comprising a matrix made of a thermoplastic plastic material and approximately 1% to approximately 40% by volume of wollastonite as a tribological additive, wherein more than half of the wollastonite content is an acicular modification.

2. Polymer material in accordance with claim 1, **characterized in that** the wollastonite content in the material is from approximately 1% to approximately 30% by volume, in particular approximately 2% to 25% by volume.

3. Polymer material in accordance with claim 1 or 2, **characterized in that** the material comprises one or more further additives, in particular lubricants and fillers, these being contained in an amount of approximately 15% by volume or less in each case.

4. Polymer material in accordance with claim 3, **characterized in that** the sum of all additives including the wollastonite content is approximately 50% by volume or less.

5. Polymer material in accordance with claim 3 or 4, **characterized in that** the further lubricants are selected from sulfides of transition metals, in particular zinc sulfide, copper sulfide, molybdenum sulfide and/or tungsten sulfide and PTFE, hexagonal boron nitride and/or graphite.

6. Polymer material in accordance with any one of claims 3 to 5, **characterized in that** the further fillers are selected from talcum, titanium dioxide, barium sulfate and reinforcement materials such as glass fibres, carbon fibres and polymer fibres, in particular aramid fibres.

7. Polymer material in accordance with any one of claims 1 to 6, **characterized in that** the volume content of acicular modification in the total volume of wollastonite is approximately 60% by volume or more, in particular approximately 70% by volume or more.

8. Polymer material in accordance with any one of claims 1 to 7, **characterized in that** the thermoplastic plastic material is selected from polyphthalamide (PPA), polyamide (PA), polyetherketone (PEK), polyetheretherketone (PEEK), polyethylene sulfone (PES), polyvinylidene fluoride (PVDF), polyphenylene sulfide (PPS), polyoxymethylene (POM), polyethylene (PE), polyimide (PI), polyester, liquid crystalline polymers (LCP), polyphenylene ether (PPE) and mixtures of these polymers.

9. Polymer material in accordance with claim 8, **characterized in that** the thermoplastic plastic material is primarily formed of PPA which is contained in the plastic material in an amount of preferably approximately 50% by volume or more.

10. Polymer material in accordance with claim 9, **characterized in that** the thermoplastic plastic material comprises a PPA content in the range of approximately 80% to approximately 90% by volume, an acicular wollastonite content in the range of approximately 10% to approximately 20% by volume and a tungsten disulfide content in the range of approximately 0.5% to approximately 2% by volume.

11. Polymer sheet, made by using a polymer material in accordance with any one of claims 1 to 10.

12. Sliding bearing, made by using a polymer material in accordance with any one of claims 1 to 10 or a film in accordance with claim 11.

13. Use of wollastonite as a tribological additive in a polymer material, in particular in accordance with any one of claims 1 to 10.

## Revendications

1. Matériau polymère, notamment destiné à des applications tribologiques, comprenant une matrice en une matière plastique thermoplastique ainsi qu'une fraction d'environ 1 à environ 40% en volume de wollastonite en tant qu'additif tribologique, la wollastonite contenue, étant présente pour plus de la moitié de sa fraction, sous une forme modifiée aciculaire.

2. Matériau polymère selon la revendication 1, **caractérisé en ce que** la fraction de wollastonite dans le matériau est d'environ 1 à environ 30% en volume, et notamment d'environ 2 à 25% en volume.

3. Matériau polymère selon la revendication 1 ou la revendication 2, **caractérisé en ce que** le matériau comprend un ou plusieurs autres additifs, notamment des lubrifiants ou des substances de charge, selon une fraction respective d'environ 15% en volume ou moins.

4. Matériau polymère selon la revendication 3, **caractérisé en ce que** la somme de tous les additifs, y compris la fraction de wollastonite, est d'environ 50% en volume ou moins.

5. Matériau polymère selon la revendication 3 ou la revendication 4, **caractérisé en ce que** lesdits autres lubrifiants sont choisis parmi ceux du groupe constitué des sulfures de métaux de transition, notamment le sulfure de zinc, le sulfure de cuivre, le disulfure de molybdène et/ou le disulfure de tungstène, ainsi que du PTFE, du nitrure de bore hexagonal et/ou du graphite.

6. Matériau polymère selon l'une des revendications 3 à 5, **caractérisé en ce que** lesdites autres substances de charge sont choisies parmi celles du groupe constitué par le talc, le dioxyde de titane, le sulfate de baryum, ainsi que des substances de renfort, notamment des fibres de verre, de carbone et de polymère, notamment des fibres aramides.

7. Matériau polymère selon l'une des revendications 1 à 6, **caractérisé en ce que** la fraction en volume de la forme modifiée aciculaire du volume total de la wollastonite, est d'environ 60% en volume ou davantage, notamment d'environ 70% en volume ou davantage.

8. Matériau polymère selon l'une des revendications 1 à 7, **caractérisé en ce que** la matière plastique thermoplastique est choisie parmi les suivantes : polyphtalamide (PPA), polyamide (PA), polyéther-cétone (PEK), polyétheréther-cétone (PEEK), polyéthylène-sulfone (PES), di-fluorure de polyvinylidène (PVDF), poly-sulfure de phénylène (PPS), polyimide (PI), polyester, polymères à cristaux liquides (LCP), poly-phénylène-éther(PPE), ainsi que des mélanges de ces polymères.

9. Matériau polymère selon la revendication 8, **caractérisé en ce que** la matière plastique thermoplastique est principalement formée de PPA, dont la fraction dans la matière plastique est de préférence d'environ 50% en volume ou davantage.

10. Matériau polymère selon la revendication 9, **caractérisé en ce que** la matière plastique thermoplastique comprend une fraction de PPA se situant dans une plage d'environ 80 à environ 90% en volume, une fraction de wollastonite aciculaire dans une plage d'environ 10 à environ 20% en volume, et une fraction de disulfure de tungstène dans une plage d'environ 0,5 à environ 2% en volume.

11. Feuille de polymère, fabriquée par l'utilisation d'un matériau polymère selon l'une des revendications 1 à 10.

12. Palier lisse, fabriqué par l'utilisation d'un matériau polymère selon l'une des revendications 1 à 10 ou d'une feuille selon la revendication 11.

13. Utilisation de wollastonite en tant qu'additif tribologique dans un matériau polymère, notamment selon l'une des revendications 1 à 10.
